# EUROPÄISCHE PATENTSCHRIFT

(11) **EP 2 758 689 B1**
(45) Veröffentlichungstag und Bekanntmachung des Hinweises auf die Patenterteilung: **22.11.2017**
(21) Anmeldenummer: 12762281.9
(22) Anmeldetag: 20.09.2012
(51) Int. Cl.: F16D 55/2255, F16D 65/00

(54) **BREMSSATTEL EINER SCHEIBENBREMSE FÜR EIN NUTZFAHRZEUG**
BRAKE CALIPER OF A DISK BRAKE FOR A UTILITY VEHICLE
ETRIER DE FREIN D'UN FREIN À DISQUE DESTINÉ À UN VÉHICULE UTILITAIRE

(30) Priorität: 22.09.2011 DE 102011114107
(43) Veröffentlichungstag der Anmeldung: 30.07.2014
(73) Patentinhaber: KNORR-BREMSE Systeme für Nutzfahrzeuge GmbH, 80809 München (DE)
(72) Erfinder: GRUBER, Markus, 85560 Ebersberg (DE); PRITZ, Wolfgang, 80637 München (DE); MACK, Martin, 80809 München (DE)
(86) Internationale Anmeldenummer: PCT/EP2012/068542
(87) Internationale Veröffentlichungsnummer: WO 2013/041624

(56) Entgegenhaltungen:
- WO-A1-2004/048798
- DE-U1-202010 003 732
- US-A- 3 326 329

## Beschreibung

Die Erfindung betrifft einen Bremssattel einer Scheibenbremse für ein Nutzfahrzeug nach dem Oberbegriff des Anspruchs 1.

Der Bremssattel als Bestandteil einer Scheibenbremse dient im Wesentlichen dazu Funktionsteile aufzunehmen, die zum Betrieb der Scheibenbremse erforderlich sind. Hierzu zählen beispielsweise eine Zuspanneinrichtung, die in einer Aufnahmekammer des Bremssattels angeordnet ist, sowie Bremsbeläge, die beidseitig einer Bremsscheibe positioniert sind und die beim Bremsen gegen die Bremsscheibe gepresst werden.

Die beiden, die Funktionsteile aufnehmenden Hälften des Bremssattels, von denen eine ein Gehäuse und die andere einen Sattelrücken bilden, sind durch Zugstreben miteinander verbunden, die überdies beim Bremsen auftretende mechanische Belastungen aufnehmen.

Zu der genannten Zuspanneinrichtung gehört ein Bremshebel, der von einem an das Gehäuse angeformten Hebeldom zur außenseitigen Umgebung hin überdeckt wird.

Neben der Aufnahme der Funktionsteile dient der Bremssattel auch deren Schutz vor Witterungseinflüssen und Verschmutzung, zumal die Scheibenbremse in einem ungeschützten und stark mit Schmutz beaufschlagten Bereich einer Fahrzeugfelge verbaut ist.

Allerdings unterliegt der Bremssattel selbst aufgrund seiner exponierten Position insbesondere in bestimmten Bereichen einem abrasiven Verschleiß, der letztendlich zu einer Reduzierung der Standzeit der Scheibenbremse insgesamt führt, vor allem, da der Bremssattel als Gussteil ausgebildet ist und insofern die verschlissenen Bereiche nicht ausgetauscht werden können.

Natürlich ist dieser Missstand vor allem in betriebswirtschaftlicher Hinsicht nicht akzeptabel, zumal gusseiserne Bremssättel für eine wesentlich längere Lebensdauer ausgelegt sind als sie durch die genannte Belastung in der Praxis tatsächlich erreichen.

Im Übrigen kann der genannte Abrasiv-Verschleiß des Bremssattels zu einer schleichenden Herabsetzung der Betriebssicherheit der Scheibenbremse führen, da beispielsweise die Zugstreben einer erheblichen Zugbelastung ausgesetzt sind, zu der sie entsprechend dimensioniert sind.

Bei einer verschleißbedingten Schwächung der Zugstreben kann es deshalb zu deren Bruch kommen, so dass die gesamte Scheibenbremse nicht mehr funktionsfähig ist mit den sich daraus ergebenden Konsequenzen, die im Einzelnen nicht dargestellt werden müssen.

In der US 3 326 329 A ist ein Bremssattel offenbart, an dem zum Schutz einer mechanischen Betätigungseinrichtung eine aus einem elastischen Material, insbesondere einem Gummi, bestehende Kappe befestigt ist, die die Betätigungseinrichtung überdeckt, wobei ein Hebel aus dieser Kappe herausragt.

Der Erfindung liegt die Aufgabe zugrunde, einen Bremssattel der gattungsgemäßen Art so weiterzuentwickeln, dass seine Standzeit optimiert und die Betriebssicherheit der Scheibenbremse insgesamt verbessert wird.

Diese Aufgabe wird durch einen Bremssattel mit den Merkmalen des Anspruchs 1 gelöst.

Mit sehr geringem konstruktiven und fertigungstechnischen Aufwand ist durch die Erfindung ein Bremssattel geschaffen, dessen Standzeit nicht mehr von systemfremden Einflüssen bestimmt wird.

Zwar tritt nach wie vor ein abrasiver Verschleiß am Bremssattel auf, jedoch nur an den angebrachten Schutzelementen, deren Platzierung durch Felderfahrungen bekannt ist.

So hat sich in der Praxis gezeigt, dass die Bereiche des betriebsbedingten Verschleißes, namentlich des abrasiven Verschleißes, vor allem an der, bezogen auf die rotierende Bremsscheibe, einlaufseitigen Zugstrebe sowie am Hebeldom zu finden sind.

Hier nun werden entsprechende Schutzelemente vorgesehen, die bevorzugt als Blechformteile ausgebildet sind und besonders einfach durch Stanzen hergestellt werden können.

Dadurch können diese Schutzelemente außerordentlich kostengünstig bereitgestellt werden, wobei zu deren Befestigung lediglich Befestigungsmittel erforderlich sind. Hierzu eignen sich vor allem Schrauben, die in vorbereitete Gewindebohrungen der Zugstrebe und des Hebeldoms eingedreht werden.

Bei einer pneumatisch betätigbaren Scheibenbremse ist rückseitig am Hebeldom ein Flansch angeformt, an dem ein Bremszylinder befestigbar ist. Dieser Flansch kann auch der Festlegung des Schutzelementes dienen, unter Verwendung der Schrauben, mit denen der Bremszylinder am Flansch angeschlossen wird.

Nach einem weiteren Gedanken der Erfindung ist vorgesehen, dass zugstrebenseitige Schutzelemente im Sinne eines plattenförmigen Bügels auszubilden , mit seitlich angeformten Befestigungslaschen, wobei dieser Zugstrebenschutz über nahezu die gesamte Länge der Zugstrebe seitlich nach außen übersteht.

Das Schutzelement für den Hebeldom, Hebeldomschutz genannt, ist bevorzugt hufeisenförmig gestaltet und bildet einen Abstreifer für beispielsweise an der Felge anhaftendes Eis, das ansonsten vom Hebeldom abgestreift wird, wie dies beim Stand der Technik der Fall ist.

Um eine möglichst lange Standzeit der Schutzelemente zu erhalten, sind diese aus einem verschleißfesten Material, insbesondere einem entsprechenden Metall gefertigt, wobei, wie erwähnt, ein Austausch dieser Schutzelemente bei Bedarf jederzeit ohne großen Aufwand möglich ist, so dass der Bremssattel problemlos die gewünschte Lebensdauer erreicht, zumindest ohne betriebsbedingte äußere Einflüsse auf die potentiellen Verschleißbereiche.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: einen erfindungsgemäßen Bremssattel in einer perspektivischen Draufsicht
- Figur 2: eine perspektivische Unteransicht auf den Bremssattel.

In den Figuren ist ein im Wesentlichen aus Gusseisen bestehender Bremssattel 1 einer Scheibenbremse für ein Nutzfahrzeug dargestellt, mit zwei parallel und abständig zueinander angeordneten, in Montagestellung eine Bremsscheibe quer zu deren Drehrichtung überbrückenden Zugstreben 4, die beidseitig der Bremsscheibe angeordnete Aufnahmen für Funktionsteile miteinander verbinden, wobei eine Aufnahme einen Sattelrücken 3 und die andere ein Gehäuse 2 mit einem angeformten Hebeldom 5 bilden.

Erfindungsgemäß sind an potentiellen Bereichen betriebsbedingten Verschleißes jeweils ein auswechselbares Schutzelement befestigt.

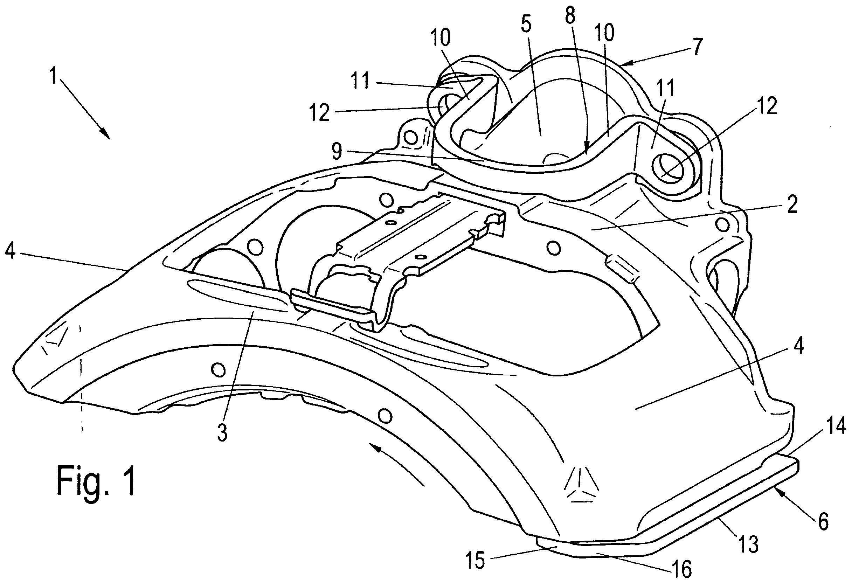

Im dargestellten Beispiel ist ein Schutzelement als Zugstrebenschutz 6 an der Unterseite der, bezogen auf die Drehrichtung der nicht dargestellten Bremsscheibe im Normalbetrieb, einlaufseitigen Zugstrebe 4 befestigt, wobei die Drehrichtung durch einen Pfeil in der Figur 1 gekennzeichnet ist.

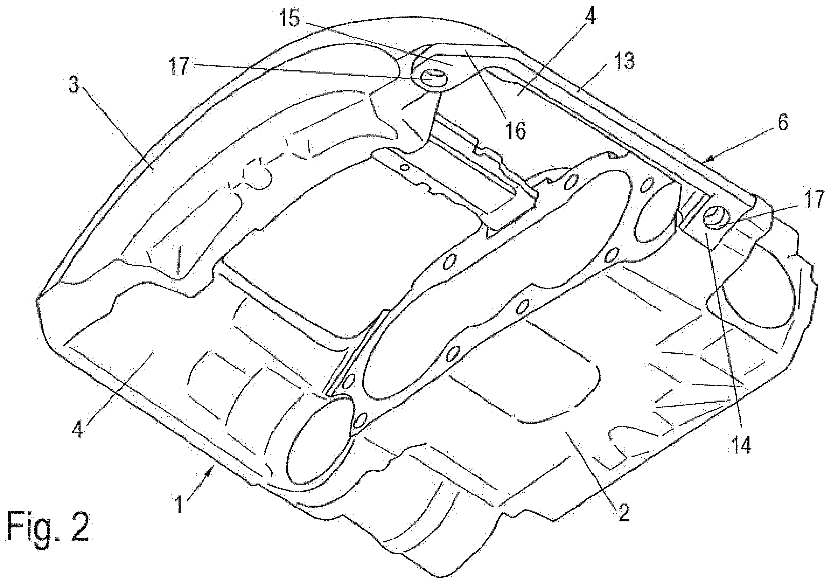

Wie insbesondere die Figur 2 sehr deutlich wiedergibt, ist der Zugstrebenschutz 6 in Form eines Bügels ausgebildet, mit einer Leiste 13 und endseitig abgewinkelten Anschlusslaschen 14, 15, die jeweils eine Bohrung 17 aufweisen, zur Durchführung einer vorzugsweise Kopfschraube, die in ein nicht dargestelltes Muttergewinde der Zugstrebe 4 eindrehbar ist, so dass der Zugstrebenschutz 6 problemlos austauschbar ist.

Die dem Gehäuse 2 abgewandte Anschlusslasche 15 des Zugstrebenschutzes 6 weist im Übergangsbereich zur Leiste 13 eine Schräge 16 auf, zur Anpassung an die Kontur der Zugstrebe 4 in diesem Bereich.

Die Figur 1 gibt sehr deutlich wieder, dass die Leiste 13 nach außen hin über die Zugstrebe 4 hinaus vorsteht, so dass ein wirksamer Schutz der Zugstrebe 4 vor durch eine Felge aufgeschleudertem Schmutz besteht.

Der Hebeldom 5, gleichfalls als potentieller Bereich eines betriebsbedingten Verschleißes erkannt, ist ebenfalls durch ein Schutzelement geschützt, gebildet durch einen Hebeldomschutz 8. Dieser ist hufeisenförmig gestaltet und stützt sich einerseits an dem dem Hebeldom 5 benachbarten Gehäusebereich ab und ist andererseits an einem Flansch 7 befestigt, an dem in Funktion ein Bremszylinder angeschlossen ist.

Der Hebeldomschutz 8, mit zwei etwa parallel zueinander verlaufenden Schenkeln 9 und einem diese miteinander verbindenden konvex gekrümmten Steg 9 weist an den freien Enden der Schenkel 10 nach außen hin abgewinkelte Laschen 11 auf, mit Durchgangsbohrungen 12 zur Durchführung von Befestigungsschrauben.

Die Höhe des Hebeldomschutzes 8 ist so bemessen, dass er den Hebeldom 5 zumindest geringfügig überragt, wodurch ein wirksamer Schutz des Hebeldomes 5 erreicht wird.

Prinzipiell besteht natürlich die Möglichkeit, Schutzelemente auch an anderen als den gezeigten Bereichen des Bremssattels 1 anzubringen, sofern sich hierfür durch Felderfahrungen die Notwendigkeit ergeben sollte.

### Bezugszeichenliste

- 1: Bremssattel
- 2: Gehäuse
- 3: Sattelrücken
- 4: Zugstrebe
- 5: Hebeldom
- 6: Zugstrebenschutz
- 7: Flansch
- 8: Hebeldornschutz
- 9: Steg
- 10: Schenkel
- 11: Lasche
- 12: Bohrung
- 13: Leiste
- 14: Anschlusslasche
- 15: Anschlusslasche
- 16: Schräge
- 17: Bohrung

## Patentansprüche

1. Bremssattel einer Scheibenbremse für ein Nutzfahrzeug, mit zwei, im Wesentlichen parallel und abständig zueinander angeordneten, in Montagestellung eine Bremsscheibe quer zu deren Drehrichtung überbrückenden Zugstreben (4), die beidseitig der Bremsscheibe angeordnete Aufnahmen für Funktionsteile miteinander verbinden, wobei eine Aufnahme einen Sattelrücken (3) und die andere ein Gehäuse (2) mit einem angeformten Hebeldom (5) bilden, **dadurch gekennzeichnet, dass** an der dem Hebeldom (5) abgewandten Unterseite der Zugstrebe (4) ein Zugstrebenschutz (6) und/oder am Hebeldom (5) ein Hebeldomschutz (8) als auswechselbares Schutzelement befestigt ist.

2. Bremssattel nach Anspruch 1, **dadurch gekennzeichnet, dass** der Zugstrebenschutz (6) an der, bezogen auf die Bremsscheibe, einlaufseitigen Zugstrebe (4) befestigt ist.

3. Bremssattel nach Anspruch 1 oder 2, **dadurch gekennzeichnet, dass** der Zugstrebenschutz (6) die Zugstrebe (4) nach außen hin überragt.

4. Bremssattel nach einem der vorhergehenden Ansprüche, **dadurch gekennzeichnet, dass** der Zugstrebenschutz (6) bügelförmig ausgebildet ist, mit einer Leiste (13) und zwei abgewinkelten Laschen (14, 15), in denen Bohrungen (12) vorgesehen sind, zur Durchführung von Befestigungsschrauben.

5. Bremssattel nach Anspruch 4 **dadurch gekennzeichnet, dass** die Leiste (13) gegenüber der Zugstrebe (4) nach außen hin vorsteht.

6. Bremssattel nach einem der vorhergehenden Ansprüche, **dadurch gekennzeichnet, dass** der Hebeldomschutz (8) hufeisenförmig gestaltet ist und zwei abgewinkelte Laschen (11) aufweist mit Durchgangsbohrungen (12) zur Durchführung von Befestigungsschrauben.

7. Bremssattel nach einem der vorhergehenden Ansprüche, **dadurch gekennzeichnet, dass** der Hebeldomschutz (8) an einem Flansch (7) des Hebeldoms (5) angeschlossen ist.

8. Bremssattel nach einem der vorhergehenden Ansprüche, **dadurch gekennzeichnet, dass** der Hebeldomschutz (8) auf dem Gehäuse (2) aufliegt und den Hebeldom (5) teilweise umschließt.

9. Bremssattel nach einem der vorhergehenden Ansprüche, **dadurch gekennzeichnet, dass** der Hebeldomschutz (8) in seiner Höhe gleich oder größer ist als die Höhe des Hebeldoms (5).

## Claims

1. Brake calliper of a disc brake for a commercial vehicle, having two tension struts arranged substantially parallel and spaced apart relative to each other, bridging over a brake disc, in the assembly position, transversely with respect to the direction of rotation thereof, wherein the tension struts (4) connect receptacles for functional parts arranged on both sides of the brake disc together, wherein one receptacle forms a calliper back (3) and the other forms a housing (2). having an integral lever spindle (5), **characterised in that** a tension strut protector (6) is fastened to the lower side of the tension strut (4) facing away from the lever spindle (5), and / or a lever spindle protector (8) is fastened to the lever spindle (5) as an exchangeable protective element.

2. Brake calliper according to claim 1, **characterised in that** the tension strut protector (6) is fastened to the tension strut (4) on the run-in side with respect to the brake disc.

3. Brake disc according to claim 1 or 2, **characterised in that** the tension strut protector (6) projects outwards over the tension strut (4).

4. Brake calliper according to one of the preceding claims, **characterised in that** the tension strut protector (6) is bracket-shaped, having a strip (13) and two angled-down tabs (14, 15), in which openings (12) are provided for the passage of fixing screws.

5. Brake calliper according to claim 4,
**characterised in that** the strip (13) protrudes outwards opposite the tension strut (4).

6. Brake calliper according to one of the preceding claims, **characterised in that** the lever spindle protector (8) is designed in a horseshoe shape and has two angled-down tabs (11) with through openings (12) for the passage of fixing screws.

7. Brake calliper according to one of the preceding claims, **characterised in that** the lever spindle protector (8) is connected to a flange (7) of the lever spindle (5).

8. Brake calliper according to one of the preceding claims, **characterised in that** the lever spindle protector (8) lies on top of the housing (2) and partially surrounds the lever spindle (5).

9. Brake calliper according to one of the preceding claims, **characterised in that** the lever spindle protector (8) has the same height as the lever spindle (5) or a greater height than the lever spindle (5).

## Revendications

1. Etrier de frein d'un frein à disque pour un véhicule utilitaire, comprenant deux tirants (4), qui sont disposés sensiblement parallèlement et à distance l'un de l'autre, qui, en position de montage, enjambent un disque de frein transversalement à sa direction de rotation et qui relient ensemble des logements, disposés des deux côtés du disque de frein, de parties fonctionnelles, un logement formant un dos (3) de l'étrier et l'autre une enveloppe (2) ayant un mandrin (5) de levier, qui y est formé, **caractérisé en ce que**, du côté inférieur, éloigné du mandrin (5) de levier, du tirant (4) est fixée une protection (6) de tirant et/ou, sur le mandrin (5) de levier, une protection (8) de mandrin de levier sous la forme d'un élément de protection remplaçable.

2. Etrier de frein suivant la revendication 1, **caractérisé en ce que** la protection (6) de tirant est fixée sur le tirant (4), du côté de l'entrée, rapporté au disque de frein.

3. Etrier de frein suivant la revendication 1 ou 2, **caractérisé en ce que** la protection (6) de tirant dépasse du tirant (4) vers l'extérieur.

4. Etrier de frein suivant l'une des revendications précédentes, **caractérisé en ce que** la protection (6) de tirant est constituée en forme d'étrier en ayant une baguette (13) et deux pattes (14, 15) coudées, dans lesquelles sont prévus des trous (12) de passage de vis de fixation.

5. Etrier de frein suivant la revendication 4, **caractérisé en ce que** la baguette (13) fait saillie vers l'extérieur par rapport au tirant (4).

6. Etrier de frein suivant l'une des revendications précédentes, **caractérisé en ce que** la protection (8) du mandrin de levier est conformée en fer à cheval et a deux pattes (11) coudées ayant des trous (12) traversants pour le passage de vis de fixation.

7. Etrier de frein suivant l'une des revendications précédentes, **caractérisé en ce que** la protection (8) du mandrin de levier est raccordée à une bride (7) du mandrin (5) de levier.

8. Etrier de frein suivant l'une des revendications précédentes, **caractérisé en ce que** la protection (8) du mandrin de levier s'applique à l'enveloppe (2) et entoure en partie le mandrin (5) du levier.

9. Etrier de frein suivant l'une des revendications précédentes, **caractérisé en ce que** la protection (8) du mandrin de levier a une hauteur supérieure ou égale à la hauteur du mandrin (5) de levier.
